# EUROPEAN PATENT SPECIFICATION

(11) **EP 1 141 062 B1**
(45) Date of publication and mention of the grant of the patent: **12.02.2003**
(21) Application number: 99971231.8
(22) Date of filing: 09.11.1999
(51) Int. Cl.: C08G 18/48, C08G 18/28

(54) **SYNTHESIS OF ENERGETIC THERMOPLASTIC ELASTOMERS CONTAINING OLIGOMERIC URETHANE LINKAGES**
HERSTELLUNG VON ENERGETISCHEN THERMOPLASTISCHEN ELASTOMEREN DIE OLIGOMERE URETHANBINDUNGEN ENTHALTEN
SYNTHESE D'ELASTOMERES THERMOPLASTIQUES ACTIFS RENFERMANT DES LIAISONS URETHANE OLIGOMERIQUE

(30) Priority: 12.11.1998 US 108456 P
(43) Date of publication of application: 10.10.2001
(73) Proprietor: ALLIANT TECHSYSTEMS INC., Edina, Minnesota 55436 (US)
(72) Inventor: SANDERSON, Andrew, John, North Ogden, UT 84414 (US); EDWARDS, Wayne, Tremonton, UT 84337 (US)
(74) Representative: Stuttard, Garry Philip
(86) International application number: US9924014
(87) International publication number: WO00034350

(56) References cited:
- EP-A- 0 353 961
- GB-A- 2 307 688
- US-A- 4 393 199
- US-A- 4 806 613
- US-A- 5 210 153

## Description

This invention relates to energetic thermoplastic elastomers which are useful as binders of high-energy compositions, such as propellants, especially rocket propellants and gun propellants, explosive munitions, gas generants of vehicle supplemental restraint systems and to methods for synthesizing the same.

### Description of the Related Art

Solid high-energy compositions, such as propellants, explosives, gasifiers, and the like comprise solid particulates, such as fuel particulates and/or oxidizer particulates, dispersed and immobilized throughout a polymeric binder matrix.

Conventional solid composite propellant binders utilize cross-linked elastomers in which prepolymers are cross-linked by chemical curing agents. As outlined in detail in U.S. Patent No. 4,361,526, there are important disadvantages to using cross-linked elastomers as binders. Cross-linked elastomers must be cast within a short period of time after addition of the curative, which time period is known as the "pot life". Disposal of a cast, cross-linked propellant composition is difficult, and usually is accomplished by burning, which poses environmental problems. Furthermore, current state-of-the-art propellant compositions have serious problems that include their use of nonenergetic binders which have lower performance and high end-of-mix viscosities.

In view of the inherent disadvantages associated with the use of cross-linked elastomeric polymers as binder materials, there has been considerable interest in developing thermoplastic elastomers suitable as binders for solid, high energy compositions. However, many thermoplastic elastomers fail to meet important requirements expected of propellant formulations, particularly the requirement of being processible below about 120°C, it being desirable that a thermoplastic elastomeric polymer for use as a binder in a high energy system have a melting temperature of between 60°C and 120°C. The melting temperature is desirably at least, 60°C because these compositions may be subject to somewhat elevated temperatures during storage and transport, and significant softening of the compositions at such elevated temperatures is unwanted. The setting of the melting temperature at not more than 120°C is determined by the instability, at elevated temperatures, of many components which ordinarily go into the compositions, particularly oxidizer particulates and energetic plasticizers. Many thermoplastic elastomers exhibit high melt viscosities which preclude high solids loading and many show considerable creep and/or shrinkage after processing. Thermoplastic elastomers typically obtain their thermoplastic properties from segments that form glassy domains which may contribute to physical properties adverse to their use as binders. Crosslinkable thermoplastic elastomers are block copolymers with the property of forming physical cross-links at predetermined temperatures. One thermoplastic elastomer, e.g., Kraton, brand TPE, obtains this property by having the glass transition point of one component block above room temperature. At temperatures below 109°C, the glassy blocks of Kraton form glassy domains and thus physically crosslink the amorphous segments. The strength of these elastomers depends upon the degree of phase separation. Thus, it remains desirable to have controlled, but significant, immiscibility between the two types of blocks, which is a function of their chemical structure and molecular weight. On the other hand, as the blocks become more immiscible, the melt viscosity increases, thus having a deleterious effect on the processibility of the material.

Above-mentioned U.S. Patent No.4,361,526 proposes a thermoplastic elastomeric binder which is a block copolymer of a diene and styrene, the styrene blocks providing a meltable crystal structure and the diene blocks imparting rubbery or elastomeric properties to the copolymer. The '526 patent states that this polymer is processed with a volatile organic solvent. Solvent processing is undesirable inasmuch as the dissolved composition cannot be cast in a conventional manner, e.g., into a rocket motor casing. Furthermore, solvent-based processing presents problems with respect to removal and recovery of solvent.

The preparation of energetic thermoplastic elastomers prepared from polyoxetane block copolymers has been proposed in U.S. Patent No. 4,483,978 to Manser and U.S. Patent No. 4,806,613 to Wardle ("the '613 patent"). According to the latter, these materials overcome the disadvantages associated with conventional cross-linked elastomers such as limited pot-life, high end-of-mix viscosity, and scrap disposal problems.

The thermoplastic materials proposed by the '613 patent involve elastomers having both (A) and (B) blocks, each derived from cyclic ethers, such as oxetane and oxetane derivatives and tetrahydrofuran (THF) and tetrahydrofuran derivatives. The monomer or combination of monomers of the (A) blocks are selected for providing a crystalline structure at usual ambient temperatures, such as below 60°C, whereas the monomer or combination of monomers of the (B) blocks are selected to ensure an amorphous structure at usual ambient temperatures, such as above -20°C. Typical of these materials is the random block copolymer (poly(3-azidomethyl-3-methyloxetane)-poly(3,3-bis(azidomethyl)oxetane), also known as poly(AMMO/BAMO). These block copolymers have good energetic and mechanical properties. Additionally, the block copolymers can be processed without solvents to serve as binders in high performance, reduced vulnerability explosive, propellant, and gas generant formulations. Advantageously, the block copolymers exhibit good compatibility with most materials used in such energetic formulations.

However, the block copolymers known in the art suffer from disadvantages that are a consequence of the short linking groups connecting the blocks. More specifically, the short linking groups attribute relatively low softening temperatures to the copolymers. In tactical and other environments in which the binder is exposed to extreme environmental conditions, the binder should be capable of maintaining their structure integrities without creeping or slumping, and be characterized by a reasonable modulus at 60°C or above. While the energetic binders disclosed in the '613 patent generally satisfy the processing requirements, they tend to soften unacceptably at elevated temperatures that sometime are encountered in tactical and similar uses.

One proposed solution to addressing this problem and imparting desired high temperature attributes to the energetic binder is to select hard blocks, i.e., A blocks, having melting temperatures well above 60°C. However, the higher softening temperatures of such A blocks deleteriously affects the processability of the binder by requiring higher and sometimes dangerous processing temperatures. Although solvents may be used to improve processability, the introduction of solvents limits the size of the articles that can be made and increases the complexity and costs of the process.

Another desired attribute of energetic binders is that the binders maintain strength, toughness, and strain capability at extremely low temperatures, preferably below -40°C. The polyethers used as the soft blocks, i.e., B blocks, in energetic thermoplastic elastomer binders tend to possess glass transition temperatures T_{g} in the range of -15°C to -30°C. Below these temperatures, the thermoplastic elastomer binders become brittle and lack sufficient toughness and strain capability. While plasticization of the soft B block potentially could be a solution to lowering T_{g} of the thermoplastic elastomer, all attempts at plasticizing the B block have been found to require unacceptable plasticizer-to-polymer ratios, making the binder unusable at ambient and higher temperatures.

It would therefore be a significant advancement in the art to provide energetic thermoplastic elastomer binders that are solid at room temperature and exhibit the excellent mechanical properties and processability of the materials disclosed in the '613 patent, while both possessing sufficiently high elevated temperature modulus and resistance to slump and creep while at the same time having a lower glass transition temperature or ability to be plasticized without adversely affecting high temperature properties.

### SUMMARY OF THE INVENTION

It is, therefore, an object of this invention to provide a thermoplastic elastomer that addresses the aforementioned problems associated with the related art and realizes the advancement expressed above.

In accordance with the principles of this invention, these and other objects are attained by the provision of a thermoplastic elastomer having A blocks and B blocks and being present in a solid state suitable for use as a binder for at least one of a propellant, explosive, and gasifier, the energetic thermoplastic elastomer being formed from a composition comprising, as constituents:
A blocks terminated with isocyanate-reactive groups derived from monomers comprising at least one member selected from the group consisting of oxetane derivatives and tetrahydrofuran derivatives, the A blocks being crystalline at temperatures below 60°C;
B blocks terminated with isocyanate-reactive groups derived from monomers comprising at least one member selected from the group consisting of oxetane and derivatives thereof, tetrahydrofuran and derivatives thereof, and oxirane and derivatives thereof, the B blocks being amorphous at temperatures above -20°C; and
linking groups derived from at least one diisocyanate for end-capping the A blocks and the B blocks and at least one difunctional oligomer comprising two functional groups which are reactive with isocyanate moieties of the diisocyanate.

Viewed from a further aspect the present invention provides a composition comprising:
50 wt% to 95 wt% of at least one solid selected from the group consisting of fuel particulates and oxidizer particulates; and
at least one thermoplastic elastomer as defined hereinbefore.

The A blocks are crystalline at temperatures below 60°C and may be one or more polyether(s) derived from one or more monomers of oxetane derivatives and / or tetrahydrofuran derivatives. The B blocks are amorphous at temperatures above -20°C and may include one or more polyether(s) derived from one or more monomers of oxetane and its derivatives, tetrahydrofuran and its derivatives, and / or oxirane and its derivatives. To effect linking, the A blocks and B blocks are capped with isocyanate moieties of diisocyanates. The isocyanate moieties of adjacent blocks are linked with an oligomer having two functional moieties that are reactive with an isocyanate moiety of the diisocyanate, hereinafter "a difunctional oligomer". The structure and length of the disfunctional oligomer may be varied to tailor the properties of the resulting thermoplastic elastomer.

It is also an object of this invention to provide a method for the preparation of the above-described energetic thermoplastic binder of this invention. In accordance with the principles of this invention, this and other objects are achieved by a method of preparing a thermoplastic elastomer having A blocks which are crystalline at temperatures below 60°C and B blocks which are amorphous at temperatures above -20°C, the method comprising:
providing the A blocks and the B blocks at approximately stoichiometric ratios intended to be present in the thermoplastic elastomer, the A blocks being terminated with isocyanate-reactive functional groups, crystalline at temperatures below 60°C and derived from monomers comprising at least one member selected from the group consisting of oxetane derivatives and tetrahydrofuran derivatives, the B blocks being terminated with isocyanate-reactive functional groups, amorphous at temperatures above -20°C and derived from monomers selected from the group consisting of oxetane and derivatives thereof, tetrahydrofuran and derivatives thereof and oxirane and derivatives thereof;
end-capping the A blocks and the B blocks by reacting the A blocks and the B blocks with at least one diisocyanate in which a first isocyanate moiety thereof is at least about five times more reactive with the terminal groups of the blocks than a second isocyanate moiety thereof, whereby the more reactive first isocyanate moiety is capable of reacting with the terminal groups of the blocks, leaving the less reactive second isocyanate moiety free and unreacted; and
linking the end-capped A blocks and the end-capped B blocks together with a difunctional oligomer comprising two isocyanate-reactive groups which are sufficiently sterically unhindered to react with the free and unreacted second isocyanate moieties of the end-capped blocks.

The diisocyanate preferably has one isocyanate moiety which is more reactive, preferably at least about five times as reactive, with the terminal hydroxyl group of each of the blocks than the other isocyanate moiety, whereby the more reactive isocyanate moiety tends to react with the terminal-hydroxyl groups of the blocks, leaving the less reactive isocyanate moiety free and unreactive. The end-capped A blocks and the end-capped B blocks are mixed together at approximately the stoichiometric ratios that the blocks are intended to be present in the energetic thermoplastic elastomer. The mixture is reacted with a chain extender, i.e. an oligomeric linking compound having two functional groups which are sufficiently unhindered to react with the free and unreacted isocyanate groups of the end-capped blocks. In this manner, the end-capped blocks are linked, but not cross-linked, to form a thermoplastic polymer.

It is still a further object of this invention to provide propellants, especially rocket propellants and gun propellants, explosives, gas generants containing the above-discussed energetic thermoplastic elastomer binder or made by procedures including the above-discussed method.

These and other objects, features, and advantages of the present invention will become apparent from the accompanying drawings and following detailed description which illustrate and explain, by way of example, the principles of the present invention.

### BRIEF DESCRIPTION OF THE DRAWINGS

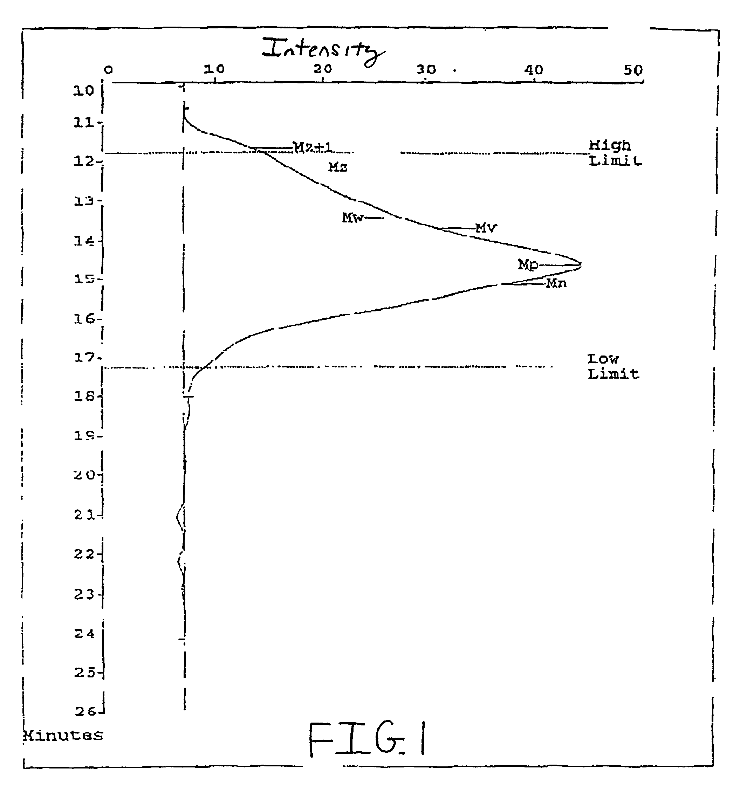

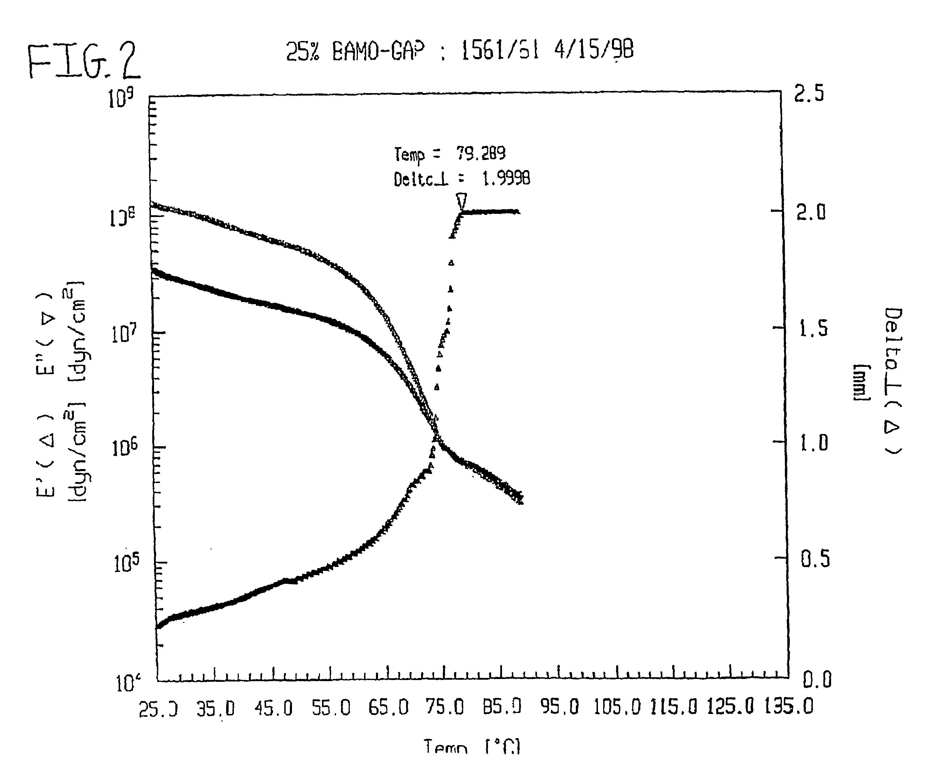

The accompanying drawings are provided to facilitate an understanding of the principles of this invention. In such drawings, FIGS. 1 and 2 are graphs showing the properties of a thermoplastic elastomer prepared in accordance with an embodiment of this invention.

### DETAILED DESCRIPTION OF THE INVENTION

The thermoplastic elastomer (AB)ₙ polymers of this invention include A blocks which are crystalline at temperatures below 60°C, preferably at temperatures below 75°C, and B blocks which are amorphous at temperatures down to -20°C. Each of the A and B blocks are polyethers derived from cyclic ethers. More specifically, the A blocks are derived from one or more monomers of oxetane derivatives and/or monomers of one or more THF derivatives. The B blocks are derived from one or more monomers of oxetane and its derivatives, one or more monomers of THF and its derivatives, and/or one or more monomers of oxirane and its derivatives. The polymers melt at temperatures between 60°C and about 120°C, and more preferably between 75°C and 100°C. The A and B blocks are mutually miscible in the melt. Consequently, the melt viscosity of the block copolymer decreases rapidly as the temperature is raised above the melting point, whereby high energy formulations may include high solids content, e.g., up to about 95% by weight of solid particulates, and can be easily processed. The invention also includes other thermoplastic elastomer block structures, such as ABA tri-block polymers and AₙB star polymers. Contributing to the miscibility of the A and B blocks is their similar chemical structure.

Oxetane monomer units that may be used in forming the A and B blocks of the present invention have the general formula: 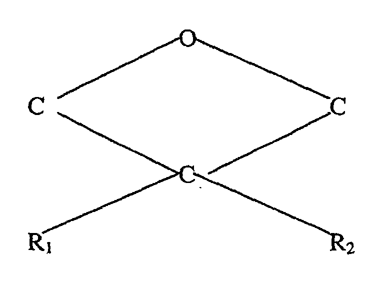 wherein the R₁ and R₂ groups are the same or different and are selected from moieties having the general formula: -(CH₂)ₙX, where n is 0-10 and X is selected from the group consisting of -H, -NO₂, -CN, -Cl, -F, -O-alkyl, -OH, -I, -ONO₂, -N(NO₂)-alkyl, -C≡CH, -Br, -CH=CH(H or alkyl), -CO₂-(H or alkyl), -N(H or alkyl)₂, -O-(CH₂)₁₋₅-O-(CH₂)₀₋₈-CH₃, and N₃.

Examples of oxetane derivatives that may be used in forming the A blocks in accordance with this invention are generally symmetrically-substituted oxetanes including, but are not limited to, the following: BEMO (3,3-(bis(ethoxymethyl)oxetane), BCMO (3,3-bis(chloromethyl)oxetane), BMMO (3,3-bis(methoxymethyl)oxetane), BFMO (3,3-bis(fluoromethyl)oxetane), BAOMO (3,3-bis(acetoxymethyl)oxetane), BHMO (3,3-bis(hydroxymethyl)oxetane), BMEMO (3,3-bis(methoxyethoxymethyl)oxetane), BIMO (3,3-bis(iodomethyl)oxetane), BNMO (3,3-bis(nitratomethyl)oxetane), BMNAMO (3,3-bis(methylnitraminomethyl)oxetane), and BAMO (3,3-bis(azidomethyl)oxetane).

Examples of oxetanes derivatives that may be used in forming the B blocks in accordance with this invention are generally unsymmetrically-substituted oxetanes including, but are not limited to, the following: HMMO (3-hydroxymethyl-3-methyloxetane), OMMO (3-octoxymethyl-3-methyloxetane), CMMO (3-chloromethyl-3-methyloxetane), AMMO (3-azidomethyl-3-methyloxetane), IMMO (3-iodomethyl-3-methyloxetane), PMMO (3-propynomethylmethyloxetane), NMMO (3-nitratomethyl-3-methyloxetane), and MNAMMO (3-methylnitraminomethyl-3-methyloxetane).

Tetrahydrofuran monomer units that may be used in forming the blocks of the present invention have the general formula: 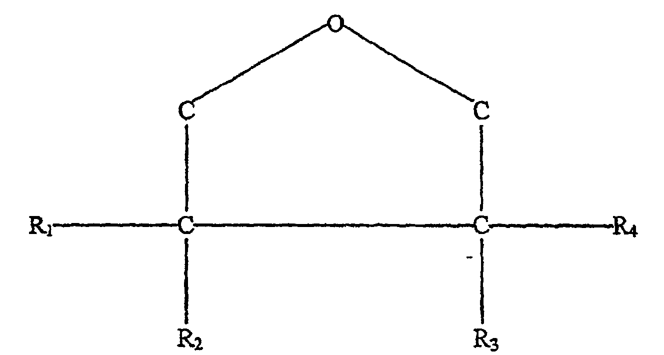 wherein the R₁-R₄ groups are the same or different and are selected from moieties set forth above in connection with the description of suitable oxetane derivatives.

Oxirane monomer units used in forming the B blocks of the present invention have the general formula: 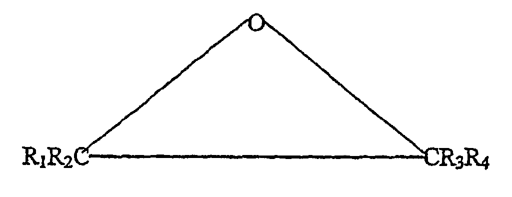 wherein R₁ and R₃ are independently selected from hydrogen and methyl, and R₂ and R₄ are independently selected from hydrogen, alkyl containing from 1 to 10 carbon atoms, chloroalkyl and bromoalkyl containing 1 to 2 carbon atoms, and nitratoalkyl, nitratoalkoxyalkyl, nitroalkyl, nitroalkoxyalkyl, azidoalkyl, azidoalkoxyalkyl, fluoronitroalkyl, and fluoronitroalkyoxyalkyl containing 1 to 5 carbon atoms provided that at least one of R₁ to R₄ is not hydrogen.

Examples of energetic oxiranes that may be used in forming the B blocks in accordance with this invention include, but are not limited to glycidyl azide polymers (C₃H₅N₃O) (GAP), especially difunctional GAP, and poly(glycidyl nitrate) (C₃H₅NO₄) (PGN). These polymers have a glass transition temperature below -20°C and are amorphous at temperatures above -20°C.

Forming thermoplastic elastomers in accordance with the invention involves
(1) formation of at least one polyether-derived homopolymer, copolymer, or terpolymer serving as the A blocks and crystalline in nature with a relatively elevated melting point, i.e., between 60°C and 120°C, preferably near 80°C and
(2) formation of at least one polyether-derived homopolymer, copolymer; or terpolymer serving as the B blocks and amorphous in structure with a glass transition temperature (T_{g}) below -20°C.

The selection of the A block may be made based on the properties desired for the intended application of the thermoplastic elastomer. Examples of preferred crystalline A blocks include blocks possessing high energy density, such as those formed from BAMO and/or BMNAMO monomers. Melting temperature and ether oxygen content are additional factors that may be taken into consideration in selecting the monomers.

The properties of the block polymer depends upon the molecular weights of the individual blocks. Typically the A blocks have number average molecular weights ranging from 3000 to 8000, whereas the B blocks have number average molecular weights ranging from 3000 to 15,000. The weight ratio of A blocks to B blocks is preferably between 15:85 to 40:60. The preferred sizes of the A and B blocks for any particular binder application may be empirically determined.

The thermoplastic elastomers of this invention preferably are in a solid state at room temperature, have a weight average molecular weight of at least 40,000, more preferably at least 60,000, still more preferably at least 80,000, and a number average molecular weight of at least 10,000, more preferably at least 12,000, still more preferably at least 15,000.

Thermoplastic elastomers produced in accordance with the present invention may be admixed with other components of a high energy formulation, such as a propellant formulation. The binder system, in addition to the thermoplastic elastomers, may optionally contain one or more plasticizers for improving the resistance of the thermoplastic elastomer to hardening at low temperatures, which may be included at a plasticizer-to-thermoplastic elastomer weight ratio of up to about 1:1. Suitable high energy plasticizers include glycidyl azide polymer (GAP), nitroglycerine, butanetriol trinitrate (BTTN), alkyl nitratomethyl nitramines, trimethylolethane trinitrate (TMETN), diethylene glycol dinitrate, triethylene glycol dinitrate (TEGDN), bis(dinitropropylacetal/-bis(dinitropropyl)formal (BDNPA/F), and mixtures thereof. Inert plasticizers can also be used. Representative inert plasticizers include, by way of example, dioctyladipate (DOA), isodecylperlargonate (IDP), dioctylphthalate (DOP), dioctylmaleate (DOM), dibutylphthalate (DBP), oleyl nitrile, triacetin, and combinations thereof. The binder system may also contain a minor amount of a wetting agent or lubricant that enables higher solids loading.

The solids content of the high energy composition generally ranges from 50 wt% to 95 wt%, higher solids loading generally being preferred so long as such loading is consistent with structural integrity. The solids include fuel material particles and powders (collectively referred to herein as particulates), such as particulate aluminum, and/or oxidizer particulates. Representative fuels include aluminum, magnesium, boron, and beryllium. Representative oxidizers and cooxidizers include ammonium perchlorate; hydroxylammonium nitrate (HAN); ammonium dinitramide (ADN); hydrazinium nitroformate; ammonium nitrate; nitramines such as cyclotetramethylene tetranitramine (HMX) and cyclotrimethylene trinitramine (RDX), 2,4,6,8,10,12-hexanitro-2,4,6,8,10,12-hexaazatetracyclo[5.5.0.0^{5,9}.0^{3,11}]-dodecane or 2,4,6,8,10,12-hexanitrohexaazaisowurtzitane (CL-20 or HNIW), and/or 4,10-dinitro-2,6,8,12-tetraoxa4,10-diazatetracyclo[5.5.0.0^{5,9},0^{3,11}]dodecane (TEX), and any combination thereof: In addition, the high energy composition may include minor amounts of additional components known in the art, such as bonding agents, burn rate modifiers, ballistic modifiers (e.g., lead).

The thermoplastic elastomer may be mixed with the solids and other components of high energy formulation at temperatures above its melting temperature. Blending may be done in conventional mixing apparatus. Because of the low viscosities of the molten polymer, no solvents are required for blending or other processing, such as extrusion.

An important advantage of having a binder which is meltable is that the elastomer from an outdated device containing can be melted down and reused. At the time of such remelting, the binder might be reformulated, e.g., by addition of additional fuel or oxidizer particulates. Accordingly, the thermoplastic elastomer provides for its eventual recycle, as opposed to the burning required for disposal of cross-linked compositions. Because the "pot life" of the thermoplastic propellant exceeds that which would reasonably be required of a propellant or explosive formulation, if any problems develop during casting, the process can be delayed as long as is reasonably necessary, merely by maintaining the formulation in a molten state.

The oxetane homopolymer blocks may be formed according to the cationic polymerization technique taught by Manser in U.S. Patent No. 4,393,199.

The oxirane homopolymer blocks may be formed according to the technique taught in U.S. Patent No. 5,120,827.

The technique employs an adduct of a substance such as a diol, e.g., 1,4-butane diol (BDO), and a catalyst for cationic polymerization, e.g., BF₃-etherate. This adduct forms with the oxetane monomer an initiating species which undergoes chain extension until n moles of monomer have been incorporated in the molecule, n being the ratio of monomers to adduct present. By adjusting the ratio of monomers to adduct present, the average molecular weight of the polymer which forms may be adjusted. If two or more monomers are present, incorporation of the monomers will be generally random but may depend upon the relative reactivities of the monomers in the polymerization reaction.

Another suitable catalyst system includes co-catalytically effective quantities of one or more triethoxonium salts and one or more alcohols, as disclosed in U.S. Application No. 08/233,219. Examples of triethoxonium salts include triethoxonium hexafluorophosphate, triethoxonium hexafluoroantimonate, and triethoxonium tetrafluoroborate.

It is understood that although the isocyanate-reactive terminal functional groups of the blocks are referred to herein as being hydroxyl groups, the isocyanate-reactive functional groups may also be amines, amides, and/or carboxyl groups.

The crystalline polyoxetane A blocks and amorphous B blocks, i.e., the respective prepolymers, are each end-capped-together or separately with one or more diisocyanates. The end-capped A and B blocks are mixed together and joined by a linking compound which has a pair of isocyanate-reactive functionalities that are sufficiently unhindered to allow them to react with the free isocyanate moieties of the end-capped copolymers and thereby join the blocks together.

Oxetane, THF, and oxirane polymer blocks normally have terminal isocyanate-reactive (e.g., hydroxyl) functions which are end-capped with the diisocyanates in accordance with the invention. Preferably, one of the isocyanate moieties of the end-capping diisocyanate is substantially more reactive with the terminal-hydroxyl moieties of the polymer blocks than the other isocyanate moiety. One of the problems with linking these types of polymer blocks is that substituted oxetane-derived hydroxyl end groups units have neopentyl structures, whereby the terminal primary hydroxyl moieties are substantially hindered and therefore less reactive. The blocks derived from oxirane derivatives are secondary alcohols, making their hydroxyl groups less reactive than the primary hydroxyl groups of the oxetane derived A blocks. The diisocyanate preferably is selected so that one of the isocyanate groups is capable of reacting with a hydroxyl-group of the polymer blocks while the other isocyanate moiety remains free and unreacted. Diisocyanates are preferably used because isocyanates of higher functionality would result in undesirable levels of cross-linking. The different reactivities of the isocyanate moieties is desirable to ensure that substantial chain extension through linking of like blocks does not occur. Thus, for purposes of this invention, one isocyanate moiety of the diisocyanate should preferably be approximately five times more reactive with terminal hydroxyl groups of oxetane and oxirane blocks than the other group. Preferably one isocyanate moiety is at least about ten times more reactive than the other.

One diisocyanate which is especially useful for purposes of the invention is 2,4-toluene diisocyanate (TDI) in which the isocyanate moiety in the 4-position is substantially more reactive with hindered terminal hydroxyl moieties than the isocyanate moiety in the 2-position. Isophorone diisocyanate (IPDI) is suitable for some applications, though less so than TDI. Examples of diisocyanates which have not worked well include diphenylmethylene diisocyanate (MDI) and hexamethylene diisocyanate (HDI).

In the end-capping reaction, the diisocyanate is used at an approximately stoichiometric molar amount relative to terminal hydroxyl groups on the polymer chain. Thus, if the polymer chain has a pair of terminal hydroxyl groups, approximately two molar equivalents, e.g., 1.75-2.2 molar equivalents of diisocyanate are used. In the ideal reaction, all of the more reactive isocyanate moieties would react with terminal hydroxyl groups, leaving all of the less reactive isocyanate moieties free. Practically, not all of the diisocyanate reacts in this manner, and some chain extension does occur. Thus, the end-capping reaction may be maximized for particular polymer chains by some adjustment in the relative molar ratios of polymer block and diisocyanate.

In one variant embodiment, the A blocks and B blocks are reacted separately with the diisocyanate, so that there is no competition of the blocks for diisocyanate molecules and each separate end-capping reaction may be carried to substantial completion. The diisocyanate may react more rapidly with one block than the other, but this difference can be compensated for by a longer reaction time with the slower reacting block. The reactivity of the terminal hydroxyl groups varies according to steric factors and also according to side-chain moieties. Energetic oxetanes, for example, generally have side-chain moieties that are electron-withdrawing, making their terminal hydroxyl groups less reactive. Once end-capped with diisocyanate, the reactivities of the polymers for linking purposes is essentially dependent only upon the reactivity of the free isocyanate, not on the chemical makeup of the polymer chain itself. Thus end-capped (A) blocks are substantially as reactive as end-capped (B) blocks. The end-capping of the oxirane blocks in this manner overcomes the problems associated with linking of oxirane-derived blocks which have secondary hydroxyl groups.

The end-capping reaction and linking reaction are carried out in a suitable solvent, e.g., one which dissolves the polymer and does not react with the free isocyanate moieties. In a preferred embodiment, the solvent is non-halogenated. Although insubstantial amounts of halogenated solvent may be present, the solution is preferably completely free of any halogenated solvent. The non-halogenated solvent should not react in the urethane reaction (i.e., do not interfere with the end capping catalyst, such as dibutyl tin dilaurate, or the linking catalyst) and forms an azeotrope with water. The solvent or solvents selected preferably are capable of dissolving more than 25% by weight of the blocks (based on total weight of the solvents and blocks) into solution, more preferably at least 35% by weight into solution, and still more preferably 50% by weight into solution. Representative solvents include cyclic ethers such as tetrahydrofuran (THF) and 1,4-dioxane; non-cyclic ethers such as ethylene glycol dimethyl ether; ketones such as methyl ethyl ketone (MEK); and esters such as ethyl acetate. Of these, THF is preferred because of its excellent solubility characteristics.

In a preferred embodiment, the solvent forms an azeotrope with water. In this preferred embodiment, after the blocks are dissolved in excess non-halogenated solvent, the solution may be dried by azeotropic distillation of the solvent, and optionally further concentrated, e.g., via distillation, in the solution to increase the volumetric loading and reaction rate. The blocks then may be end-capped, separately or together, and linked in the same or a different non-halogenated solvent. By distilling off excess solvent to remove water, subsequent reaction with a diisocyanate may proceed without significant interference from competing reactions between the isocyanate moieties and water. Additionally, the solution remains homogeneous and further distillation serves to concentrate the polymer solution, producing higher reaction rates and requiring less reactor capacity. The reaction rates may be improved by conducting the end-capping reaction at elevated temperatures, such as 30°C to 80°C, more preferably 40°C to 60°C. The process may be conducted by a batch or continuous method. For example, the prepolymer and catalyst may be continuously fed through a mixer/extruder into which is injected a diisocyanate and a diol at appropriate rates and positions so that urethane linking occurs within the extruder and energetic thermoplastic elastomer is continuously produced for processing.

Suitable catalysts for promoting the end-capping reaction include, as a preferred class, organic tin compounds with at least one and preferably two labile groups, such as chloride or acetate, bound directly to the tin. Suitable tin catalyst include diphenyl tin dichloride, dibutyl tin dichloride, dibutyl tin dilaurate, dibutyl tin diacetate. Tertiary amine catalysts may also be used.

The oligomeric linking compound is one which has two functional groups which are sufficiently unhindered to react with the-free isocyanate moieties on the end-capped blocks so as to link A blocks to B blocks, A blocks to A blocks, and B blocks to B blocks via a urethane reaction. Preferred functional groups are hydroxyl groups, although amine, amide, and carboxyl groups, and mixtures thereof also react in a urethane reaction. Primary functional groups are preferred.

An oligomeric glycol containing urethane moieties is preferably used to react the free isocyanate moieties on the end-capped blocks. The oligomeric glycol may be prepared from a mixture of one or more diisocyanates and an excess amount of one or more diols. The diisocyanate(s) and diol(s) selected and the ratio of these reagents may be varied to tailor the properties of the thermoplastic elastomer. The diol to diisocyanate molar ratio is preferably selected to be between 5:1 to 5:4, more preferably 2:1, to maintain acceptable processing temperatures, obtain adequate linking of the isocyanate-capped prepolymers, and improve the thermomechanical properties of the final thermoplastic elastomer. A suitable urethane reaction catalyst promotes the reaction between the diisocyanate(s) and diol(s) to form oligomers. The catalysts discussed above in connection with the linking of the A and B blocks are suitable for this purpose. Representative diols that may be selected for preparing the difunctional oligomer include, by way of example, unbranched aliphatic diols having 2 to 7 carbon atoms, such as ethylene glycol, propylene glycol, butylene glycol; and cycloaliphatic diols such as 1,4-cyclohexanedimethanol, and any combination thereof. Representative diisocyanates for preparing the difunctional oligomer include, by way of example, aliphatic diisocyanates such as hexane diisocyanate, and aryl diisocyanates such as methylene-bis(4-phenyl isocyanate), phenylene diisocyanate, toluene diisocyanate, and xylylene diisocyanate, and any combination thereof. Preferably, the difunctional oligomer has a number average molecular weight Mₙ of from 350 to 900.

As in the end-capping reaction, some solvent is preferably used, as is a catalyst, such as described above. Conveniently, the reaction mixtures of the A blocks and B blocks may be mixed together without prior separation of the blocks from their respective end-capping reaction mixtures. The linking compound can be added directly to this mixture of A and B blocks. The catalyst is thereby already present when the linking compound is added.

The linking compound is added in an amount such that the total number of linking-compound functional groups approximately equals the total number of free isocyanate groups of the end-capped polymer blocks. Thus, to provide an (AB)ₙ polymer with multiple blocks in each chain, the linking compound to polymer block molar ratio is in the range of 0.9-1.1, e.g., 1.0. Accordingly, optimal molar ratios of blocks and linking chemicals may have to be empirically determined.

In the end-capping and block linking steps, the reaction can be followed with NMR and IR. With NMR, the urethane-forming reaction can be followed through the methylene groups on the polymer adjacent to the terminal hydroxyl groups. With IR, the change from isocyanate to urethane can be directly followed.

Synthesis of polyoxetanes is described in U.S. Patent Nos. 4,483,978 and 4,806,613.

The invention will now be described in greater detail by way of the following examples, which are not to be construed as being exhaustive as to the scope of this invention.

As referred to herein, "dry" means that less than 1 wt% water was present.

For the following experiments, poly(azidomethyloxirane) was supplied by 3M Speciality Chemicals of St. Paul, MN (Lot L-12564). Unless otherwise specified, all other materials were obtained from Aldrich of Milwaukee, WI.

### EXAMPLE 1 (poly(3,3-bis(azidomethyl)oxetane))

A 5 liter jacketed flask equipped with a mechanical stirrer was charged with 600 grams of tribromoneopentylalcohol (AmeriBrom, Inc. of New York), 1200 ml of toluene, and 6 grams of tetrabutylammonium bromide. The mixture was cooled to 12°C and 193 grams of sodium hydroxide was added dropwise as a 40 wt% solution keeping the temperature at 12°C. After 36 hours the reaction mixture was washed with water until the pH was less than 9 to obtain the crude product which was distilled to obtain 3,3-bis(bromomethyl)oxetane at 65% yield.

A 5 liter jacketed flask equipped with a mechanical stirrer was charged with 1450 grams of the 3,3-bis(bromomethyl)oxetane and 1720 ml of toluene. The mixture was stirred and heated to 60°C before 1600 ml of water, 14.7 grams of tetrabutylammonium bromide, and 862 grams of sodium azide were added. After 24 hours, the reaction mixture was cooled to room temperature and washed three times with 2000 ml of water. The toluene and water were removed from the organic layer by distillation to give pure 3,3-bis(azidomethyl)oxetane at 85% yield.

Under an argon atmosphere, 14.94 grams of butane diol was added to a flame dried 5 liter round-bottomed flask charged with 1340 ml of dry methylene chloride. To this mixture, 11.77 grams of borontrifluoride-etherate was added and the reaction was allowed to proceed for one hour at room temperature. The reactor was then cooled to -10°C and 937.78 grams of the 3,3-bis(azidomethyl)oxetane was added. The solution was allowed to come to room temperature and left to react for three days. The reaction was then quenched by the addition of 50 ml of saturated brine solution. The organic phase was separated off and washed with 100 ml of 10 wt% sodium bicarbonate solution before the solvent was removed on a rotovapor. The resulting liquid was then poured into 5 liters of methanol to precipitate the polymer, which was filtered from the solution and dried under vacuum at 30°C.

### EXAMPLE 2 (poly(3-azidomethyl-3-methyloxetane))

A 5 liter jacketed flask equipped with a mechanical stirrer was charged with 1062 grams of sodium azide, 1972 ml of water, and 2450 grams of 3-bromomethyl-3-methyloxetane (supplied by AmeriBrom, Inc. of New York). This mixture was brought to reflux with vigorous mixing. After 48 hours the mixture was cooled to room temperature. The organic layer was separated off and washed three times with 1000 ml of water before being dried over molecular sieves to yield pure 3-azidomethyl-3-methyloxetane at 85% yield.

Under an argon atmosphere, 14.94 grams of butane diol was added to a flame dried 5 liter round-bottomed flask charged with 1.340 ml of dry methylene chloride. To this mixture, 11.77 grams of borontrifluoride-etherate was added and the reaction was allowed to proceed for one hour at room temperature. The reactor was then cooled to -10°C and 937.78 grams of the 3-azidomethyl-3-methyloxetane was added. The solution was allowed to come to room temperature and left to react for three days. The reaction was then quenched by the addition of 50 ml of saturated brine solution. The organic phase was separated off and washed with 100 ml of 10 wt% sodium bicarbonate solution before the solvent was removed on a rotovapor. The resulting liquid was then poured into 5 liters of methanol to precipitate the polymer, which was filtered from the solution and dried under vacuum at 30°C.

### EXAMPLE 3 (Random block copolymer of poly(3-azidomethyl-3-methyloxetane) and poly(3,3-bis(azidomethyl)oxetane) linked with a urethane oligomer)

In a 25 ml round bottom flask, a urethane oligomer was prepared by dissolving 2.70 grams of toluene-2,4-diisocyanate in 5 ml tetrahydrofuran and adding to the solution 0.2 grams of dibutyltin dilaurate followed by 2.80 grams of butane-1,4-diol. This reaction mixture was stirred for 1 hour at room temperature.

In a separate 500 ml round bottom flask, 68.34 grams of dry dihydroxyl poly(3-azidomethyl-3-methyloxetane) with a hydroxyl equivalent weight of 3356 and 34.54 grams of dry poly(3,3-bis(azidomethyl)oxetane) with a hydroxyl equivalent weight of 3235 were dissolved in 400 ml of dry methylene chloride. The solution was concentrated and dried by evaporation of the tetrahydrofuran under reduced pressure via a rotovapor until 100 grams of the solvent remained. To this solution, 2.5 grams of dibutyltin dilaurate and 5.61 grams of toluene-2,4-diisocyanate were added while stirring with a magnetic stirrer at ambient temperature and pressure. After one hour, the urethane oligomer was added to this solution, causing the solution to become steadily more viscous. After an additional four hours, the solution was diluted with methanol in a volume ratio of 1:5. The methanol was decanted off, and the precipitated polymer was washed three times with fresh methanol (1:5 volume ratio) to give a rubbery granular product with the following properties:
E^{1.0} = 7.74MPa ((psi) 1122)
εₘ(%)=303
ε_{f} (failure) (%) = 327
σₘ = 2.50MPa ((psi) 362)
σₘ (corrected) = 10.37MPa ((psi) 1504)
ShoreA = 63

(E^{1.0} represents Young's Modulus, εₘ and ε_{f}, respectively representing maximum measured strain and calculated failure strain, and σₘ and σₘ (corrected), respectively representing measured maximum stress and calculated corrected maximum stress, were measured using an INSTRON model 1225. The crosshead speed was 1.52cm (0.6 inches) per minute. Measurements were made at room temperature using 20mm x 4mm dumbbell samples. ShoreA representing hardness was measured on a Shore Conveloader at room temperature.)

### EXAMPLE 4 (Ramdom block copolymer of poly(azidomethyloxirane) and poly(3,3-bis(azidomethyl)oxetane))

In a 25 ml round bottom flask, a urethane oligomer was prepared by dissolving 1.55 grams of toluene-2,4-diisocyanate in 4 ml tetrahydrofuran and adding to the solution 0.1 of dibutyltin dilaurate followed by 1.60 grams of butane-1,4-diol. This reaction mixture was stirred for 1 hour at room temperature.

In a separate 250 ml round bottom flask, 17.94 grams of dry difunctional poly(azidomethyloxirane) with a hydroxyl equivalent weight of 1174 and 6.63 grams of dry poly(3,3-bis(azidomethyl)oxetane) with a hydroxyl equivalent weight of 2390 were dissolved in 100 ml of dry tetrahydrofuran. The solution was concentrated and dried by evaporation of the tetrahydrofuran under reduced pressure via a rotovapor until 20 grams of the solvent remained. To this solution, 75 ml of dibutyltin dilaurate and 3.097 grams of toluene-2,4-diisocyanate were added while stirring with a magnetic stirrer at ambient temperature and pressure. After one hour, the urethane oligomer was added to this solution, causing the solution to become steadily more viscous. After 20 minutes, the solution was too viscous to stir and was diluted with 20 ml of dry tetrahydrofuran and allowed to react for a further 20 minutes before being poured into methanol in a volume ratio of 1:5. The methanol was decanted off, and the precipitated polymer was washed three times with fresh methanol (1:5 volume ratio) to give a rubbery granular product with the properties shown in FIGS. I and 2 and set forth below:
Mn = 26240
Mw = 175500
Mw/Mn = 6.69

Molecular weight distribution was determined by gel permeation chromotography using polystyrene standards, with the results shown in FIG. 1. The GPC trace in FIG. 1 demonstrates that the prepolymers were linked to produce a copolymer having a higher molecular weight and dispersivity than the homopolymer blocks. The DMA trace in FIG. 2 shows the melt transition of random block (BAMO-GAP)ₙ at 75-80°C with a material modulus reducing only slowly before this point.

### EXAMPLES 5-7 (Random block copolymer of poly(3-azidomethyl-3-methyloxetane) and poly(3,3-bis(azidomethyl)oxetane) linked with a urethane oligomer)

In a 500 ml round bottom flask, 45 grams of difunctional poly(3-azidomethyl-3-methyloxetane) with a hydroxyl equivalent weight of 3125 and 15 grams of poly(3,3-bis(azidomethyl)oxetane) with a hydroxyl equivalent weight of 3152 were dissolved in 300 ml of tetrahydrofuran. The solution was concentrated and dried by evaporation of the tetrahydrofuran or a rotovapor until a solution with 90 grams of solvent remained. To this solution 0.6 grams of dibutyltin dichloride and 3.34 grams of toluene-2,4-diisocyanate was added and the mixture allowed to react for 3 hours to end-cap the prepolymer.

For Example 5, 0.22 grams of butanediol was added to one quarter of the isocyanate end-capped prepolymer mixture. The reaction was allowed to continue for 14 hours before it was precipitated with methanol in a volume ratio of 1:5. The methanol was decanted off, and the precipitated polymer was washed three times with fresh methanol (1:5 volume ratio) to give a rubbery granular product.

For Example 6, a urethane oligomer was derived from a mixture of 2 ml of tetrahydrofuran, 0.42 grams of toluene-2,4-diisocyanate, 0.43 grams of butane-1,4-diol, and 0.1 grams of dibutyltin dichloride, which were allowed to react for one hours. The urethane oligomer was then added to one quarter of the isocyanate end-capped prepolymer mixture and allowed to react for 14 hours before it was precipitated with methanol in a volume ratio of 1:5. The methanol was decanted off, and the precipitated polymer was washed three times with fresh methanol (1:5 volume ratio) to give a rubbery granular product.

For Example 7, a urethane oligomer was derived from a mixture of 2 ml of tetrahydrofuran, 0.83 grams of toluene-2,4-diisocyanate, 0.65 grams of butane-1,4-diol, and 0.1 grams of dibutyltin dichloride, which were allowed to react for one hours. The urethane oligomer was then added to one quarter of the isocyanate end-capped prepolymer mixture and allowed to react for 14 hours before it was precipitated with methanol in a volume ratio of 1:5. The methanol was decanted off, and the precipitated polymer was washed three times with fresh methanol (1:5 volume ratio) to give a rubbery granular product.

**TABLE 1**

| | Example 5 | Example 6 | Example 7 |
|---|---|---|---|
| diol:diisocyanate molar ratio | 1:0 | 2:1 | 3:2 |
| Mn | 11440 | 12340 | 13240 |
| Mw | 134800 | 142000 | 122600 |
| Mw/Mn | 11.78 | 11.51 | 9.26 |
| E^{1.0} | 520 | 669 | 823 |
| εₘ (%) | 311 | 897 | 536 |
| ε_{f} (failure) (%) | 372 | 1082 | 562 |
| σₘ MPa (psi) | 1.05 (153) | 2.38 (345) | 2.07 (300) |
| σₘ (corrected)MPa (psi) | 4.67 (678) | 24.6 (3575) | 16.4 (2381) |
| ShoreA . | 49 | 60 | 65 |

### EXAMPLE 8 AND COMPARATIVE EXAMPLE A

In a 50 ml beaker, 10 grams of random block poly(3-azidomethyl-3-methyloxetane)polymer(3,3-bis(azidomethyl)oxetane)) prepared with either an oligomeric linkage derived from butane-1,4-diol and toluene-2,4-diisocyanate (Example 8) or butene-1,4,-diol (Comparative Example A) were dissolved in 10 ml of tetrahydrofuran. To this solution was added 1.25 grams of triethyleneglycol dinitrate and 1.25 grams of butyl nitratoethylnitramine. The solvent was removed by evaporation in a vacuum over at 60°C. The plasticized polymer was then melted at 90°C, poured onto a flat TEFLON plate and allowed to solidify at room temperature for 48 hours before being cut into 20 mm x 4-mm dumbbell samples and subjected to testing:

**TABLE 2**

| | Example 8 | Comparative Example A |
|---|---|---|
| diol:diisocyanate molar ratio | 2:1 | 1:0 |
| wt % energetic plasticizer | 20 | 20 |
| E^{1.0} (psi) | 174 | Plasticized polymer too soft to make samples |
| εₘ (%) | 126 | |
| ε_{f} (corrected) (%) | 139 | |
| σₘ MPa (psi) | 0.42 (62) | |
| σₘ (corrected)_{Mpa} (psi) | 0.97 (141) | |
| ShoreA | 28 | |

The foregoing detailed description of the preferred embodiments of the invention has been provided for the purpose of explaining the principles of the invention and its practical application, thereby enabling others skilled in the art to understand the invention for various embodiments and with various modifications as are suited to the particular use contemplated.

## Claims

1. A thermoplastic elastomer having A blocks and B blocks and being present in a solid state suitable for use as a binder for at least one of a propellant, explosive, and gasifier, the energetic thermoplastic elastomer being formed from a composition comprising, as constituents:
A blocks terminated with isocyanate-reactive groups derived from monomers comprising at least one member selected from the group consisting of oxetane derivatives and tetrahydrofuran derivatives, the A blocks being crystalline at temperatures below 60°C;
B blocks terminated with isocyanate-reactive groups derived from monomers comprising at least one member selected from the group consisting of oxetane and derivatives thereof, tetrahydrofuran and derivatives thereof, and oxirane and derivatives thereof, the B blocks being amorphous at temperatures above -20°C; and
linking groups derived from at least one diisocyanate for end-capping the A blocks and the B blocks and at least one difunctional oligomer comprising two functional groups which are reactive with isocyanate moieties of the diisocyanate.

2. A thermoplastic elastomer as defined in claim 1, wherein:
the diisocyanate contains a first isocyanate moiety which is at least five times more reactive with the terminal groups of the blocks than a second isocyanate moiety thereof, whereby the more reactive first isocyanate moiety is capable of reacting with and end capping the terminal groups of the blocks, leaving the less reactive second isocyanate moiety free and unreacted; and
the difunctional oligomer has two isocyanate-reactive hydroxyl groups which are sufficiently sterically unhindered to be reactive with the free and unreacted second isocyanate moieties of the end-capped blocks.

3. A thermoplastic elastomer as defined in claim 2, wherein the diisocyanate comprises 2, 4- toluene diisocyanate.

4. A thermoplastic elastomer as defined in claim 1, wherein the A blocks are crystalline at temperatures below 75 °C.

5. A thermoplastic elastomer as defined in claim 1, wherein the difunctional oligomer comprises a reaction product of at least one diol and at least one diisocyanate, the diol being selected from the group consisting of ethylene glycol, propylene glycol, butylene glycol and 1,4-cyclohexanedimethanol and any combination thereof.

6. A thermoplastic elastomer as defined in claim 1, wherein the difunctional oligomer comprises a reaction product of at least one diol and at least one diisocyanate, the diisocyanate being selected from the group consisting of hexane diisocyanate, methylene-bis-(4-phenyl isocyanate), phenylene diisocyanate, toluene diisocyanate and xylylene diisocyanate and combinations thereof.

7. A thermoplastic elastomer as defined in claim 1 having a weight average molecular weight of at least 40,000 and a number average molecular weight of at least 10,000.

8. A thermoplastic elastomer as defined in claim 1 having a weight average molecular weight of at least 60,000 and a number average molecular weight of at least 12,000.

9. A thermoplastic elastomer as defined in claim 1 having a weight average molecular weight of at least 80,000 and a number average molecular weight of at least 15,000.

10. A thermoplastic elastomer as defined in claim 1, wherein a weight ratio of A to B blocks is between 15:85 to 40:60.

11. A thermoplastic elastomer as defined in claim 1, wherein the isocyanate-reactive terminal groups of the A and B blocks are hydroxyl groups.

12. A composition comprising:
50 wt% to 95 wt% of at least one solid selected from the group consisting of fuel particulates and oxidizer particulates; and
at least one thermoplastic elastomer as defined in claim 1.

13. A composition as defined in claim 12, wherein:
the diisocyanate contains a first isocyanate moiety which at least five times more reactive with the terminal groups of the blocks than a second isocyanate moiety thereof, whereby the more reactive first isocyanate moiety is capable of reacting with and end capping the terminal groups of the blocks, leaving the less reactive second isocyanate moiety free and unreacted; and
the difunctional oligomer has two isocyanate-reactive hydroxyl groups which are sufficiently sterically unhindered to be reactive with the free and unreacted second isocyanate moieties of the end-capped blocks.

14. A composition as defined in claim 12, wherein the A blocks are crystalline at temperatures below 75°C.

15. A composition as defined in claim 12, wherein the difunctional oligomer comprises a reaction product of at least one diol and at least one diisocyanate, the diol being selected from the group consisting of ethylene glycol, propylene glycol, butylene glycol and 1,4-cyclohexanedimethanol and any combination thereof

16. A composition as defined in claim 12, wherein the difunctional oligomer comprises a reaction product of at least one diol and at least one diisocyanate, the diisocyanate being selected from the group consisting of hexane diisocyanate, methylene-bis-(4-phenyl isocyanate), phenylene diisocyanate, toluene diisocyanate and xylylene diisocyanate and combinations thereof

17. A composition as defined in 12, wherein the solid is at least one member selected from the group consisting of aluminium particulates, ammonium perchlorate and ammonium nitrate.

18. A composition as defined in claim 12, further comprising at least one member selected from the group consisting of cyclotetramethylene tetranitramine (HMX), cyclotrimethylene trinitramine (RDX), 2,4,6,8,10,12-hexanitro-2,4,6,8,10,12-hexaazatetracyclo[5.5.0.0^{5,9}.0^{3,11}] (CL20), and 4,10-dinitro-2,6,8,12-tetraoxa-4,10-diazatetracyclo[5.5.0.0^{5,9}.0^{3,11}]dodecane (TEX).

19. A composition as defined in claim 12, further comprising at least one energetic plasticizer selected from the group consisting of nitroglycerine, butanetriol trinitrate (BTTN), alkyl nitratomethyl nitramines, trimethylolethane trinitrate (TMETN), diethylene glycol dinitrate, triethylene glycol dinitrate, glycidyl azide polymer (GAP), and bis (dinitropropylacetal/-bis(dinitropropyl) formal (BDNPA/F).

20. A composition as defined in claim 12, wherein the isocyanate-reactive terminal groups of the B blocks are hydroxyl groups.

21. A rocket motor propellant comprising the composition defined in claim 12.

22. A gun propellant comprising the composition defined in claim 12.

23. An explosive comprising the composition defined in claim 12.

24. A gasifier comprising the composition defined in claim 12.

25. A method of preparing a thermoplastic elastomer having A blocks
which are crystalline at temperatures below 60°C and B blocks which are amorphous at temperatures above -20°C, the method comprising:
providing the A blocks and the B blocks at approximately stoichiometric ratios intended to be present in the thermoplastic elastomer, the A blocks being terminated with isocyanate-reactive functional groups, crystalline at temperatures below 60°C and derived from monomers comprising at least one member selected from the group consisting of oxetane derivatives and tetrahydrofuran derivatives, the B blocks being terminated with isocyanate-reactive functional groups, amorphous at temperatures above -20°C and derived from monomers selected from the group consisting of oxetane and derivatives thereof, tetrahydrofuran and derivatives thereof and oxirane and derivatives thereof;
end-capping the A blocks and the B blocks by reacting the A blocks and the B blocks with at least one diisocyanate in which a first isocyanate moiety thereof is at least about five times more reactive with the terminal groups of the blocks than a second isocyanate moiety thereof, whereby the more reactive first isocyanate moiety is capable of reacting with the terminal groups of the blocks, leaving the less reactive second isocyanate moiety free and unreacted; and
linking the end-capped A blocks and the end-capped B blocks together with a difunctional oligomer comprising two isocyanate-reactive groups which are sufficiently sterically unhindered to react with the free and unreacted second isocyanate moieties of the end-capped blocks.

26. A method as defined in claim 25, wherein the diisocyanate comprises 2,4-toluene diisocyanate.

27. A method as defined in claim 25, wherein the A blocks are crystalline at temperatures below 75°C.

28. A method as defined in claim 25, further comprising:
preparing the difunctional oligomer by reacting at least one diol and at least one diisocyanate, the diol being selected from the group consisting of ethylene glycol, propylene glycol, butylene glycol and 1,4-cyclohexanedimethanol and any combination thereof

29. A method as defined in claim 25 further comprising:
preparing the difunctional oligomer by reacting at least one diol and at least one diisocyanate, the diisocyanate being selected from the group consisting of hexane diisocyanate, methylene-bis-(4-phenyl isocyanate), phenylene diisocyanate, toluene diisocyanate and xylylene diisocyanate and combinations thereof

30. A method as defined in claim 25, wherein the isocyanate-reactive terminal groups of the A and B blocks are hydroxyl groups.

31. A thermoplastic elastomer as defined in claim 1, wherein the A blocks have a melting point between 60°C and 120°C.

32. A thermoplastic elastomer as defined in claim 1, wherein the A blocks have a melting point between 75°C and 100°C.

33. A thermoplastic elastomer as defined in claim 1 wherein the difunctional oligomer comprises a urethane glycol.

34. A thermoplastic elastomer having A blocks and B blocks and being present in a solid state suitable for use as a binder for at least one of a propellant, explosive and gasifier, the thermoplastic elastomer being formulated from a composition comprising, as constituents;
A blocks terminated with isocyanate-reactive groups derived from monomers comprising at least one member selected from the group consisting of 3,3-(bis(ethoxymethyl)oxetane, 3,3- bis(chloromethyl)oxetane, 3,3- bis(methoxymethyl)oxetane, 3,3- bis(fluoromethyl)oxetane, 3,3-bis(acetoxymethyl)oxetane, 3,3-bis(hydroxymethyl)oxetane, 3,3- bis(methoxyethoxymethyl)oxetane, 3,3-bis(iodomethyl)oxetane, 3,3- bis(nitratomethyl)oxetane, 3,3-bis(methylnitraminomethyl)oxetane, and 3,3- bis(azidomethyl)oxetane;
B blocks terminated with isocyanate-reactive groups derived from monomers comprising at least one member selected from the group consisting of 3-hydroxymethyl-3-methyloxetane, 3-octoxymethyl-3-methyloxetane, 3-chloromethyl-3-methyloxetane, 3-azidomethyl-3-methyloxetane, 3-iodomethyl-3-methyloxetane, 3-propynomethylmethyloxetane, 3-nitratomethyl-3-methyloxetane, 3-methylnitraminomethyl-3-methyloxetane, tetrahydrofuran, glycidyl azide polymer and poly(glycidyl nitrate); and
linking groups derived from at least one diisocyanate for end-capping the A blocks and the B blocks and at least one difunctional oligomer comprising two functional groups which are reactive with isocyanate moieties of the diisocyanate.

35. A thermoplastic elastomer as defined in claim 34, wherein:
the diisocyanate contains a first isocyanate moiety which is at least five times more reactive with the terminal groups of the blocks than a second isocyanate moiety thereof, whereby the more reactive first isocyanate moiety is capable of reacting with and end capping the terminal groups of the blocks, leaving the less reactive second isocyanate moiety free and unreacted; and
the difunctional oligomer has two isocyanate-reactive hydroxyl groups which are sufficiently sterically unhindered to be reactive with the free and unreacted second isocyanate moieties of the end-capped blocks.

36. A thermoplastic elastomer as defined in claim 34 wherein the diisocyanate comprises 2, 4- toluene diisocyanate.

37. A thermoplastic elastomer as defined in claim 34 wherein the difunctional oligomer comprises a reaction product of at least one diol and at least one diisocyanate, the diol being selected from the group consisting of ethylene glycol, propylene glycol, butylene glycol and 1,4-cyclohexanedimethanol and any combination thereof.

38. A thermoplastic elastomer as defined in claim 34 wherein the difunctional oligomer comprises a reaction product of at least one diol and at least one diisocyanate, the diisocyanate being selected from the group consisting of hexane diisocyanate, methylene-bis-(4-phenyl isocyanate), phenylene diisocyanate, toluene diisocyanate and xylylene diisocyanate and combinations thereof.

39. A thermoplastic elastomer as defined in claim 34 wherein a weight ratio of A to B blocks is between 15:85 to 40:60.

40. A thermoplastic elastomer as defined in claim 34 wherein the isocyanate reactive terminal groups of the A and B blocks are hydroxyl groups.

41. A thermoplastic elastomer as defined in claim 34 wherein the difunctional oligomer comprises a urethane glycol.

## Patentansprüche

1. Thermoplastisches Elastomeres, das A-Blöcke und B-Blöcke hat und in einem festen Zustand vorliegt, das zur Verwendung als Bindemittel für mindestens ein Treibmittel, einen Explosivstoff und/oder ein Gasbildungsmittel geeignet ist, wobei das energetische thermoplastische Elastomere aus einer Masse gebildet worden ist, die als Bestandteile:
A-Blöcke, terminiert mit Isocyanat-reaktiven Gruppen, abgeleitet von Monomeren, die mindestens eine Substanz ausgewählt aus der Gruppe bestehend aus Oxetanderivaten und Tetrahydrofuranderivaten umfassen, wobei die A-Blöcke bei Temperaturen unterhalb 60°C kristallin sind;
B-Blöcke, terminiert mit Isocyanat-reaktiven Gruppen, abgeleitet von Monomeren, die mindestens eine Substanz ausgewählt aus der Gruppe bestehend aus Oxetan und Derivaten davon, Tetrahydrofuran und Derivaten davon und Oxiran und Derivaten davon umfassen, wobei die B-Blöcke bei Temperaturen oberhalb -20°C amorph sind; und
Verknüpfungsgruppen. abgeleitet von mindestens einem Diisocyanat für die Endverkappung der A-Blöcke und der B-Blöcke und mindestens einem difunktionellen Oligomeren, umfassend zwei funktionelle Gruppen, die mit Isocyanatgruppierungen des Diisocyanats reaktiv sind,
umfasst.

2. Thermoplastisches Elastomeres nach Anspruch 1, **dadurch gekennzeichnet, dass** das Diisocyanat eine erste Isocyanatgruppierung enthält, die gegenüber den terminalen bzw. endständigen Gruppen der Blöcke fünf Mal reaktiver ist als eine zweite Isocyanatgruppierung davon, wobei die reaktivere erste Isocyanatgruppierung dazu imstande ist, sich mit den terminalen bzw. endständigen Gruppen der Blöcke umzusetzen und diese endzuverkappen, wobei die weniger reaktive zweite Isocyanatgruppierung frei und nicht umgesetzt zurückbleibt und dass das difunktionelle Oligomere zwei Isocyanat-reaktive Hydroxylgruppen hat, die genügend sterisch unbehindert sind, um gegenüber den freien und nicht umgesetzten zweiten Isocyanatgruppierungen der endverkappten Blocke reaktiv zu sein.

3. Thermoplastisches Elastomeres nach Anspruch 2, **dadurch gekennzeichnet, dass** das Diisocyanat 2,4-Toluoldiisocyanat umfasst.

4. Thermoplastisches Elastomeres nach Anspruch 1, **dadurch gekennzeichnet, dass** die A-Blöcke bei Temperaturen unterhalb 75°C kristallin sind.

5. Thermoplastisches Elastomeres nach Anspruch 1, **dadurch gekennzeichnet, dass** das difunktionelle Oligomere ein Reaktionsprodukt von mindestens einem Diol und mindestens einem Diisocyanat umfasst, wobei das Diol aus der Gruppe bestehend aus Ethylenglycol, Propylenglycol, Butylenglycol und 1,4-Cyclohexandimethanol und einer beliebigen Kombination davon ausgewählt worden ist.

6. Thermoplastisches Elastomeres nach Anspruch 1, **dadurch gekennzeichnet, dass** das difunktionelle Oligomere ein Reaktionsprodukt von mindestens einem Diol und mindestens einem Diisocyanat umfasst, wobei das Diisocyanat aus der Gruppe bestehend aus Hexandiisocyanat, Methylen-bis-(4-phenylisocyanat), Phenylendiisocyanat, Toluoldiisocyanat und Xylylendiisocyanat und Kombinationen davon ausgewählt worden ist.

7. Thermoplastisches Elastomeres nach Anspruch 1, **dadurch gekennzeichnet, dass** es ein gewichtsmittleres Molekulargewicht von mindestens 40.000 und ein zahlenmittleres Molekulargewicht von mindestens 10.000 hat.

8. Thermoplastisches Elastomeres nach Anspruch 1, **dadurch gekennzeichnet, dass** es ein gewichtsmittleres Molekulargewicht von mindestens 60.000 und ein zahlenmittleres Molekulargewicht von mindestens 12.000 hat.

9. Thermoplastisches Elastomeres nach Anspruch 1, **dadurch gekennzeichnet, dass** es ein gewichtsmittleres Molekulargewicht von mindestens 80.000 und ein zahlenmittleres Molekulargewicht von mindestens 15.000 hat.

10. Thermoplastisches Elastomeres nach Anspruch 1, **dadurch gekennzeichnet, dass** das Gewichtsverhältnis der A- zu B-Blöcke zwischen 15:85 und 40:60 liegt.

11. Thermoplastisches Elastomeres nach Anspruch 1, **dadurch gekennzeichnet , dass** die Isocyanat-reaktiven terminalen Gruppen der A- und B-Blöcke Hydroxylgruppen sind.

12. Masse, umfassend:
50 Gew.-% bis 95 Gew.-% mindestens eines Peststoffs ausgewählt aus der Gruppe bestehend aus teilchenförmigen Brennstoffen und teilchenförmigen Oxidationsmitteln; und
mindestens ein thermoplastisches Elastomeres nach Anspruch 1.

13. Masse nach Anspruch 12, **dadurch gekennzeichnet, dass** das Diisocyanat eine erste Isocyanatgruppierung enthält, die gegenüber den terminalen bzw. endständigen Gruppen der Blöcke fünf Mal reaktiver ist als eine zweite Isocyanatgruppierung davon, wobei die reaktivere erste Isocyanatgruppierung dazu imstande ist, sich mit den terminalen bzw. endständigen Gruppen der Blöcke umzusetzen und diese endzuverkappen, wobei die weniger reaktive zweite Isocyanatgruppierung frei und nicht umgesetzt zurückbleibt, und dass das difunktionelle Oligomere zwei Isocyanat-reaktive Hydroxylgruppen hat, die genügend sterisch unbehindert sind, um gegenüber den freien und nicht umgesetzten zweiten Isocyanatgruppierungen der endverkappten Blocke reaktiv zu sein.

14. Masse nach Anspruch 12, **dadurch gekennzeichnet, dass** die A-Blöcke bei Temperaturen unter 75°C kristallin sind.

15. Masse nach Anspruch 12, **dadurch gekennzeichnet, dass** das difunktionelle Oligomere ein Reaktionsprodukt von mindestens einem Diol und mindestens einem Diisocyanat umfasst, wobei das Diol aus der Gruppe bestehend aus Ethylenglycol, Propylenglycol, Butylenglycol und 1,4-Cyclohexandimethanol und einer beliebigen Kombination davon ausgewählt worden ist.

16. Masse nach Anspruch 12, **dadurch gekennzeichnet, dass** das difunktionelle Oligomere ein Reaktionsprodukt von mindestens einem Diol und mindestens einem Diisocyanat umfasst, wobei das Diisocyanat aus der Gruppe bestehend aus Hexandiisocyanat, Methylen-bis-(4-phenylisocyanat), Phenylendiisocyanat, Toluoldiisocyanat und Xylylendiisocyanat und Kombinationen davon ausgewählt worden ist.

17. Masse nach Anspruch 12, **dadurch gekennzeichnet, dass** der Feststoff mindestens eine Substanz ausgewählt aus der Gruppe bestehend aus teilchenförmigem Aluminium, Ammoniumperchlorat und Ammoniumnitrat ist.

18. Masse nach Anspruch 12, **dadurch gekennzeichnet, dass** sie weiterhin mindestens eine Substanz ausgewählt aus der Gruppe bestehend aus Cyclotetramethylentetranitramin (HMX), Cyclotrimethylentrinitramin (RDX), 2,4,5,8,10,12-Hexanitro-2,4,6,8,10,12-hexaazatetracyclo-[5.5.0.0^{5,9}.0^{3,11}] (CL20) und 4,10-Dinitro-2,6,8,12-tetraoxa-4,10-diazatetracyclo-[5.5.0.0^{5,9}.0^{3,11}]-dodekan (TEX) enthält.

19. Masse nach Anspruch 12, **dadurch gekenn-zeichnet, dass** sie weiterhin mindestens einen energetischen Weichmacher ausgewählt aus der Gruppe bestehend aus Nitroglycerin, Butantrioltrinitrat (BTTN), Alkylnitratomethylnitraminen, Trimethylolethantrinitrat (TMETN), Diethylenglycoldinitrat, Triethylenglycoldinitrat, Glycidylazidpolymerem (GAP) und Bis- (dinitropropyl)acetal/-bis-(dinitropropyl)-formal (BDMPA/F) enthält.

20. Masse nach Anspruch 12, **dadurch gekennzeichnet, dass** die Isocyanat-reaktiven terminalen Gruppen der B-Blöcke Hydroxylgruppen sind.

21. Treibmittel für Raketenmotoren, umfassend die Masse nach Anspruch 12.

22. Treibmittel für Geschütze bzw. Gewehre bzw. Pistolen, umfassend die Masse nach Anspruch 12.

23. Explosivstoff, umfassend die Masse nach Anspruch 12.

24. Gasbildungsmittel, umfassend die Masse nach Anspruch 12.

25. Verfahren zur Herstellung eines thermoplastischen Elastomeren, das A-Blöcke, die bei Temperaturen unter 60°C kristallin sind, und B-Blöcke, die bei Temperaturen oberhalb -20°C amorph sind, hat, umfassend:
Bereitstellung der A-Blöcke und der B-Blöcke in ungefähr stöchiometrischen Verhältniesen, die in dem thermoplastischen Elastomeren vorhanden sein sollen, wobei die A-Blöcke mit Isocyanat-reaktiven funktionellen Gruppen terminiert worden sind, bei Temperaturen unterhalb 60°C kristallin sind und von Monomeren abgeleitet sind, die mindestens eine Substanz ausgewählt aus der Gruppe bestehend aus Oxetanderivaten und Tetrahydrofuranderivaten umfassen, wobei die B-Blöcke mit Isocyanat-reaktiven funktionellen Gruppen terminiert worden sind, bei Temperaturen oberhalb -20°C amorph sind und von Monomeren, ausgewählt aus der Gruppe bestehend aus Oxetan und Derivaten davon, Tetrahydrofuran und Derivaten davon und Oxiran und Derivaten davon, abgeleitet sind;
Endverkappung der A-Blöcke und der B-Blöcke durch Umsetzung der A-Blöcke und der B-Blöcke mit mindestens einem Diisocyanat, bei dem eine erste Isocyanatgruppierung mindestens gegenüber den terminalen Gruppen der Blöcke fünf Mal reaktiver ist als eine zweite Isocyanatgruppierung davon, wobei die reaktivere erste Isocyanatgruppierung dazu imstande ist, sich mit den terminalen Gruppen der Blöcke umzusetzen, wobei die weniger reaktive zweite Isocyanatgruppierung frei und nicht umgesetzt zurückbleibt; und
Verknüpfung der endverkappten A-Blöcke und der endverkappten B-Blöcke miteinander mit einem difunktionellen Oligomeren, umfassend zwei Isocyanat-reaktive Gruppen, die genügend sterisch unbehindert sind, um sich mit den freien und nicht umgesetzten zweiten Isocyanatgruppierungen der endverkappten Blöcke umzusetzen.

26. Verfahren nach Anspruch 25, **dadurch gekennzeichnet, dass** das Diisocyanat 2,4-Toluoldiisocyanat umfasst.

27. Verfahren nach Anspruch 25, **dadurch gekennzeichnet, dass** die A-Blöcke bei Temperaturen unterhalb 75°C kristallin sind.

28. Verfahren nach Anspruch 25, **dadurch gekennzeichnet, dass** es weiterhin die Herstellung des difunktionellen Oligomeren durch Umsetzung von mindestens einem Diol mit mindestens einem Diisocyanat umfasst, wobei das Diol aus der Gruppe bestehend aus Ethylenglycol, Propylenglycol, Butylenglycol und 1,4-Cyclohexandimethanol und einer beliebigen Kombination davon ausgewählt wird.

29. Verfahren nach Anspruch 25, **dadurch gekennzeichnet, dass** es weiterhin die Herstellung des difunktionellen Oligomeren durch Umsetzung von mindestens einem Diol mit mindestens einem Diisocyanat umfasst, wobei das Diisocyanat aus der Gruppe bestehend aus Hexandiisocyanat, Methylen-bis-(4-phenylisocyanat), Phenylendiisocyanat, Toluoldiisocyanat und Xylylendiisocyanat und Kombinationen davon ausgewählt wird.

30. Verfahren nach Anspruch 25, **dadurch gekennzeichnet, dass** die Isocyanat-reaktiven therminalen Gruppen der A- und B-Blöcke Hydroxylgruppen sind.

31. Thermoplastisches Elastomeres nach Anspruch 1, **dadurch gekennzeichnet, dass** die A-Blöcke einen Schmelzpunkt zwischen 60°C und 120°C haben.

32. Thermoplastisches Elastomeres nach Anspruch 1, **dadurch gekennzeichnet , dass** die A-Blöcke einen Schmelzpunkt zwischen 75°C und 100°C haben.

33. Thermoplastisches Elastomeres nach Anspruch 1, **dadurch gekennzeichnet, dass** das difunktionelle Oligomere ein Urethanglycol umfasst.

34. Thermoplastisches Elastomeres, das A-Blöcke und B-Blöcke hat und in einem festen Zustand vorliegt, das zur Verwendung als Bindemittel für mindestens ein Treibmittel, einen Explosivstoff und/oder ein Gasbildungsmittel geeignet ist, wobei das thermoplastische Elastomere aus einer Masse formuliert worden ist, die als Bestandteile:
A-Blöcke, terminiert mit Isocyanat-reaktiven Gruppen, abgeleitet von Monomeren, die mindestens eine Substanz ausgewählt aus der Gruppe bestehend aus 3,3-Bis-(ethoxymethyl)oxetan, 3,3-Bis-(chloromethyl)oxetan, 3,3-Bis-(methoxymethyl)oxetan, 3,3-Bis-(fluoromethyl)oxetan, 3,3-Bis-(acetoxymethyl)oxetan, 3,3-Bis-(hydroxymethyl)oxetan, 3,3-Bis-(methoxyethoxymethyl)-oxetan, 3,3-Bis-(iodomethyl)oxetan, 3,3-Bis-(nitratomethyl)-oxetan, 3,3-Bis-(methylnitraminomethyl)oxetan und 3,3-Bis-(azidomethyl)oxetan umfassen;
B-Blöcke, terminiert mit Isocyanat-reaktiven Gruppen, abgeleitet von Monomeren, die mindestens eine Substanz ausgewählt aus der Gruppe bestehend aue 3-Hydroxymethyl-3-methyloxetan, 3-Octoxymethyl-3-methyloxetan, 3-Chloromethyl-3-methyloxetan, 3-Azidomethyl-3-methyloxetan, 3-Iodomethyl-3-methyloxetan, 3-Propynomethylmethyloxetan, 3-Nitratomethyl-3-methyloxetan, 3-Methylnitraminomethyl-3-methyloxetan, Tetrahydrofuran, Glycidylazidpolymeres und Poly(glycidylnitrat) umfassen; und
Verknüpfungsgruppen, abgeleitet von mindestens einem Diisocyanat für die Endverkappung der A-Blöcke und der B-Blöcke und mindestens einem difunktionellen Oligomeren, umfassend zwei funktionelle Gruppen, die mit den Isocyanatgruppierungen des Diisocyanats reaktiv sind,
umfasst.

35. Thermoplastisches Elastomeres nach Anspruch 34, **dadurch gekennzeichnet, dass** das Diisocyanat eine erste Isocyanatgruppierung enthalt, die gegenüber den terminalen bzw. endständigen Gruppen der Blöcke fünf Mal reaktivere ist als eine zweite Isocyanatgruppierung davon, wobei die reaktivere erste Isocyanatgruppierung dazu imstande ist, sich mit den terminalen bzw. endständigen Gruppen der Blöcke umzusetzen und diese endzuverkappen, wobei die weniger reaktive zweite Isocyanatgruppierung frei und nicht umgesetzt zurückbleibt und dass das difunktionelle Oligomere zwei Isocyanat-reaktive Hydroxylgruppen hat, die genügend sterisch unbehindert sind, um gegenüber den freien und nicht umgesetzten zweiten Isocyanatgruppierungen der endverkappten Blöcke reaktiv zu sein.

36. Thermoplastisches Elastomeres nach Anspruch 34, **dadurch gekennzeichnet, dass** das Diisocyanat 2,4-Toluoldiisocyanat umfasst.

37. Thermoplastisches Elastomeres nach Anspruch 34, **dadurch gekennzeichnet, dass** das difunktionelle Oligomere ein Reaktionsprodukt von mindestens einem Diol und mindestens einem Diisocyanat umfasst, wobei das Diol aus der Gruppe bestehend aus Ethylenglycol, Propylenglycol, Butylenglycol und 1,4-Cyclohexandimethanol und einer beliebigen Kombination davon ausgewählt worden ist.

38. Thermoplastisches Elastomeres nach Anspruch 34, **dadurch gekennzeichnet, dass** das difunktionelle Oligomere ein Reaktionsprodukt von mindestens einem Diol und mindestens einem Diisocyanat umfasst, wobei das Diisocyanat aus der Gruppe bestehend aus Hexandiisocyanat, Methylen-bis-(4-phenylisocyanat), Phenylendiisocyanat, Toluoldiisocyanat und Xylylendiisocyanat und Kombinationen davon ausgewählt worden ist.

39. Thermoplastisches Elastomeres nach Anspruch 34, **dadurch gekennzeichnet, dass** das Gewichtsverhältnis der A- zu B-Blöcke zwischen 15:85 und 40:60 liegt.

40. Thermoplastisches Elastomeres nach Anspruch 34, **dadurch gekennzeichnet, dass** die Isocyanat-reaktiven terminalen Gruppen der A- und B-Blöcke Hydroxylgruppen sind.

41. Thermoplastisches Elastomeres nach Anspruch 34, **dadurch gekennzeichnet, dass** das difunktionelle Oligomere ein Urethanglycol umfasst.

## Revendications

1. Elastomère thermoplastique comportant des séquences A et des séquences B et étant présent dans un état solide approprié pour son utilisation en tant qu'un liant pour au moins l'un des éléments consistant en propulseur, explosif et gaséificateur, l'élastomère thermoplastique énergétique étant formé à partir d'une composition comprenant, en tant que constituants :
des séquences A se terminant par des groupes réactifs vis-à-vis de l'isocyanate dérivées de monomères comprenant au moins un membre choisi dans le groupe consistant en dérivés d'oxétane et dérivés de tétrahydrofuranne; les séquences A étant cristallines aux températures inférieures à 60°C ;
des séquences B se terminant par des groupes réactifs vis-à-vis de l'isocyanate dérivées de monomères comprenant au moins un membre choisi dans le groupe consistant en oxétane et ses dérivés, tétrahydrofuranne et ses dérivés, et oxirane et ses dérivés, les séquences B étant amorphes aux températures supérieures à -20°C; et
des groupes de liaison constitués d'au moins un di-isocyanate en vue du coiffage terminal des séquences A et des séquences B et d'au moins un oligomère difonctionnel comprenant deux groupes fonctionnels qui sont réactifs avec les fragments isocyanates du di-isocyanate.

2. Elastomère thermoplastique tel que défini dans la revendication 1, dans lequel :
le di-isocyanate contient un premier fragment isocyanate qui est au moins cinq fois plus réactif vis-à-vis des groupes terminaux des séquences qu'un second fragment isocyanate de celui-ci, le premier fragment isocyanate, plus réactif, étant ainsi capable de réagir avec et de coiffer les groupes terminaux des séquences, laissant le second fragment isocyanate moins réactif libre et non réagi ; et
l'oligomère difonctionnel comporte deux groupes hydroxyles réactifs vis-à-vis de l'isocyanate dont l'empêchement stérique est suffisamment faible pour qu'ils soient réactifs vis-à-vis des seconds fragments isocyanates libres et non réagis des séquences coiffées.

3. Elastomère thermoplastique tel que défini dans la revendication 2, dans lequel le di-isocyanate comprend du di-isocyanate de 2,4-toluène.

4. Elastomère thermoplastique tel que défini dans la revendication 1, dans lequel les séquences A sont cristallines aux températures inférieures à 75°C.

5. Elastomère thermoplastique tel que défini dans la revendication 1, dans lequel l'oligomère difonctionnel comprend un produit de réaction d'au moins un diol et d'au moins un di-isocyanate, le diol étant choisi dans le groupe consistant en éthylène glycol, propylène glycol, butylène glycol et 1,4-cyclohexane diméthanol et l'une quelconque de leurs combinaisons.

6. Elastomère thermoplastique tel que défini dans la revendication 1, dans lequel l'oligomère difonctionnel comprend un produit de réaction d'au moins un diol et d'au moins un di-isocyanate, le di-isocyanate étant choisi dans le groupe consistant en di-isocyanate d'hexane, bis-(4-phényl isocyanate) de méthylène, di-isocyanate de phénylène, di-isocyanate de toluène et di-isocyanate de xylylène et leurs combinaisons.

7. Elastomère thermoplastique tel que défini dans la revendication 1 dont le poids moléculaire moyen molaire est d'au moins 40.000 et le poids moléculaire moyen massique est d'au moins 10.000.

8. Elastomère thermoplastique tel que défini dans la revendication 1 dont le poids moléculaire moyen molaire est d'au moins 60.000 et le poids moléculaire moyen massique est d'au moins 12.000.

9. Elastomère thermoplastique tel que défini dans la revendication 1 dont le poids moléculaire moyen molaire est d'au moins 80.000 et le poids moléculaire moyen massique est d'au moins 15.000.

10. Elastomère thermoplastique tel que défini dans la revendication 1, dans lequel un rapport pondéral des séquences A sur les séquences B est compris entre 15/85 et 40/60.

11. Elastomère thermoplastique tel que défini dans la revendication 1, dans lequel les groupes terminaux des séquences A et B réagissant avec l'isocyanate sont des groupes hydroxyles.

12. Composition comprenant :
de 50 % en poids à 95 % en poids d'au moins un solide choisi dans le groupe consistant en particules de carburant et particules d'oxydant ; et
au moins un élastomère thermoplastique tel que défini dans la revendication 1.

13. Composition telle que définie dans la revendication 12, dans laquelle :
le di-isocyanate contient un premier fragment isocyanate qui est au moins cinq fois plus réactif vis-à-vis des groupes terminaux des séquences qu'un second fragment isocyanate de celui-ci, le premier fragment isocyanate, plus réactif, étant ainsi capable de réagir avec et de coiffer les groupes terminaux des séquences, laissant le second fragment isocyanate, moins réactif, libre et non réagi ; et
l'oligomère difonctionnel comporte deux groupes hydroxyles réactifs vis-à-vis de l'isocyanate dont l'empêchement stérique est suffisamment faible pour qu'ils soient réactifs vis-à-vis des seconds fragments isocyanates libres et non réagis des séquences coiffées.

14. Composition telle que définie dans la revendication 12, dans laquelle les séquences A sont cristallines aux températures inférieures à 75°C.

15. Composition telle que définie dans la revendication 12, dans laquelle l'oligomère difonctionnel comprend un produit de réaction d'au moins un diol et d'au moins un di-isocyanate, le diol étant choisi dans le groupe consistant en éthylène glycol, propylène glycol, butylène glycol et 1,4-cyclohexane diméthanol et l'une quelconque de leurs combinaisons.

16. Composition telle que définie dans la revendication 12, dans laquelle l'oligomère difonctionnel comprend un produit de réaction d'au moins un diol et d'au moins un di-isocyanate, le di-isocyanate étant choisi dans le groupe consistant en di-isocyanate d'hexane, bis-(4-phényl isocyanate) de méthylène, di-isocyanate de phénylène, di-isocyanate de toluène et di-isocyanate de xylylène et leurs combinaisons.

17. Composition telle que définie dans la revendication 12, dans laquelle le solide est au moins un membre choisi dans le groupe consistant en particules d'aluminium, perchlorate d'ammonium et nitrate d'ammonium.

18. Composition telle que définie dans la revendication 12, comprenant en outre au moins un membre choisi dans le groupe consistant en cyclotétraméthylène tétranitramine (HMX), cyclotriméthylène trinitramine (RDX), 2,4,6,8,10,12-hexanitro-2,4,6,8,10,12-hexa-azatétracyclo[5.5.0.0^{5,9}.0^{3,11}](CL20) et 4,10-dinitro-2,6,8,12-tétroxa-4,10-diazatétracyclo[5.5.0.0^{5,9}.0^{3,11}]-dodécane (TEX).

19. Composition telle que définie dans la revendication 12, comprenant au moins un plastifiant énergétique choisi dans le groupe consistant en nitroglycérine, trinitrate de butanetriol (BTTN), nitramines d'alkylnitratométhyle, trinitrate de triméthyloléthane (TMETN), dinitrate de diéthylène glycol, dinitrate de triéthylène glycol, azothydrure de glycidyle polymérique (GAP) et bis-(dinitropropylacétal/bis-(dinitropropyl)formal (BDNPA/F).

20. Composition telle que définie dans la revendication 12, dans laquelle les groupes terminaux des séquences B qui réagissent avec l'isocyanate sont des groupes hydroxyles.

21. Propulseur pour fusée comprenant la composition définie dans la revendication 12.

22. Propulseur pour canon comprenant la composition définie dans la revendication 12.

23. Explosif comprenant la composition définie dans la revendication 12.

24. Gaséificateur comprenant la composition définie dans la revendication 12.

25. Procédé de préparation d'un élastomère thermoplastique comprenant des séquences A qui sont cristallines aux températures inférieures à 60°C et des séquences B qui sont amorphes aux températures supérieures à -20°C, le procédé comprenant :
la foumiture des séquences A et des séquences B destinées à être présentes dans l'élastomère thermoplastique dans des rapports approximativement stoechiométriques, les séquences A se terminant par des groupes fonctionnels réactifs vis-à-vis de l'isocyanate, étant cristallines aux températures inférieures à 60°C et étant dérivées de monomères comprenant au moins un membre choisi dans le groupe consistant en dérivés d'oxétane et dérivés de tétrahydrofuranne, les séquences B se terminant par des groupes fonctionnels réactifs vis-à-vis de l'isocyanate, étant amorphes aux températures supérieures à -20°C et étant dérivées de monomères choisis dans le groupe consistant en oxétane et ses dérivés, tétrahydrofuranne et ses dérivés, et oxirane et ses dérivés ;
le coiffage des séquences A et des séquences B par mise en réaction des séquences A et des séquences B avec au moins un di-isocyanate dans lequel un premier fragment isocyanate est au moins cinq fois plus réactif vis-à-vis des groupes terminaux des séquences qu'un second fragment isocyanate de celui-ci, le premier fragment isocyanate, plus réactif, étant ainsi capable de réagir avec et de coiffer les groupes terminaux des séquences, laissant le second fragment isocyanate, moins réactif, libre et non réagi ; et
la liaison des séquences A coiffées et des séquences B coiffées les unes aux autres par l'intermédiaire d'un oligomère difonctionnel comprenant deux groupes qui sont réactifs vis-à-vis de l'isocyanate et dont l'empêchement stérique est suffisamment faible pour qu'ils soient réactifs vis-à-vis des seconds fragments isocyanate libres et non réagis des séquences coiffées.

26. Procédé tel que défini dans la revendication 25, dans lequel le di-isocyanate comprend du di-isocyanate de 2,4-toluène.

27. Procédé tel que défini dans la revendication 25, dans lequel les séquences A sont cristallines aux températures inférieures à 75°C.

28. Procédé tel que défini dans la revendication 25, comprenant en outre :
la préparation de l'oligomère difonctionnel par mise en réaction d'au moins un diol et d'au moins un di-isocyanate, le diol étant choisi dans le groupe consistant en éthylène glycol, propylène glycol, butylène glycol et 1,4-cyclohexane diméthanol et l'une quelconque de leurs combinaisons.

29. Procédé tel que défini dans la revendication 25, comprenant en outre :
la préparation de l'oligomère difonctionnel par mise en réaction d'au moins un diol et d'au moins un di-isocyanate, le di-isocyanate étant choisi dans le groupe consistant en di-isocyanate d'hexane, bis-(4-phényl isocyanate) de méthylène, di-isocyanate de phénylène, di-isocyanate de toluène et di-isocyanate de xylylène et leurs combinaisons.

30. Procédé tel que défini dans la revendication 25, dans lequel les groupes terminaux des séquences A et B réactifs vis-à-vis de l'isocyanate sont des groupes hydroxyles.

31. Elastomère thermoplastique tel que défini dans la revendication 1, dans lequel le point de fusion des séquences A est compris entre 60°C et 120°C.

32. Elastomère thermoplastique tel que défini, dans la revendication 1 dans lequel le point de fusion des séquences A est compris entre 75°C et 100°C.

33. Elastomère thermoplastique tel que défini dans la revendication 1, dans lequel l'oligomère difonctionnel comprend un uréthane glycol.

34. Elastomère thermoplastique comportant des séquences A et des séquences B et étant présent dans un état solide approprié à son utilisation en tant qu'un liant pour au moins un propulseur, un explosif et un gaséificateur, l'élastomère thermoplastique étant formulé à partir d'une composition comprenant, en tant que constituants :
des séquences A se terminant par des groupes réactifs vis-à-vis de l'isocyanate constituées de monomères comprenant au moins un membre choisi dans le groupe consistant en 3,3-bis(éthoxyméthyl)oxétane, 3,3-bis(chlorométhyl)oxétane, 3,3-bis(méthoxyméthyl)oxétane, 3,3-bis(fluorométhyl)oxétane, 3,3-bis(acétoxyméthyl)oxétane, 3,3-bis(hydroxyméthyl)oxétane, 3,3-bis(méthoxyéthoxyméthyl)oxétane, 3,3-bis(iodométhyl)oxétane, 3,3-bis(nitratométhyl)oxétane, 3,3-bis(méthylnitraminométhyl)-oxétane, et 3,3-bis(azidométhyl)oxétane ;
des séquences B se terminant par des groupes réactifs vis-à-vis de l'isocyanate constituées de monomères comprenant au moins un membre choisi dans le groupe consistant en 3-hydroxyméthyl-3-méthyloxétane, 3-octoxyméthyl-3-méthyloxétane, 3-chlorométhyl-3-méthyloxétane, 3-azidométhyl-3-méthyloxétane, 3-iodométhyl-3-méthyloxétane, 3-propynométhylméthyloxétane, 3-nitratométhyl-3-méthyloxétane, 3-méthylnitraminométhyl-3-méthyloxétane, tétrahydrofuranne, polymère d'azothydrure de glycidyle et poly(nitrate de glycidyle); et
la liaison des groupes dérivés d'au moins un di-isocyanate en vue du coiffage des séquences A et des séquences B et d'au moins un oligomère difonctionnel comprenant deux groupes fonctionnels qui sont réactifs vis-à-vis des fragments isocyanates du di-isocyanate.

35. Elastomère thermoplastique tel que défini dans la revendication 34, dans lequel :
le di-isocyanate contient un premier fragment isocyanate qui est au moins cinq fois plus réactif vis-à-vis des groupes terminaux des séquences qu'un second fragment isocyanate de celui-ci, le premier fragment isocyanate, plus réactif, étant ainsi capable de réagir avec et de coiffer les groupes terminaux des séquences, laissant le second fragment isocyanate, moins réactif, libre et non réagi ; et
l'oligomère difonctionnel comporte deux groupes hydroxyles réactifs vis-à-vis de l'isocyanate dont l'empêchement stérique est suffisamment faible pour qu'ils soient réactifs vis-à-vis des seconds fragments isocyanates libres et non réagis des séquences coiffées.

36. Elastomère thermoplastique tel que défini dans la revendication 34, dans lequel le di-isocyanate comprend du di-isocyanate de 2,4-toluène.

37. Elastomère thermoplastique tel que défini dans la revendication 34, dans lequel l'oligomère difonctionnel comprend un produit de réaction d'au moins un diol et d'au moins un di-isocyanate, le diol étant choisi dans le groupe consistant en éthylène glycol, propylène glycol, butylène glycol et 1,4-cyclohexane diméthanol et l'une quelconque de leurs combinaisons.

38. Elastomère thermoplastique tel que défini dans la revendication 34, dans lequel l'oligomère difonctionnel comprend un produit de réaction d'au moins un diol et d'au moins un di-isocyanate, le di-isocyanate étant choisi dans le groupe consistant en di-isocyanate d'hexane, bis-(4-phényl isocyanate) de méthylène, di-isocyanate de phénylène, di-isocyanate de toluène et di-isocyanate de xylylène et leurs combinaisons.

39. Elastomère thermoplastique tel que défini dans la revendication 34 dans lequel un rapport pondéral des séquences A sur les séquences B est compris entre 15/85 et 40/60.

40. Elastomère thermoplastique tel que défini dans la revendication 34 dans lequel les groupes terminaux des séquences A et B réagissant avec l'isocyanate sont des groupes hydroxyles.

41. Elastomère thermoplastique tel que défini dans la revendication 34 dans lequel l'oligomère difonctionnel comprend un uréthane glycol.
